# EUROPEAN PATENT APPLICATION

(11) **EP 0 743 334 A1**
(43) Date of publication of application: **20.11.1996**
(21) Application number: 96107093.5
(22) Date of filing: 06.05.1996
(51) Int. Cl.: C08G 18/42, C08G 18/22, C08G 63/42

(54) **Polyester polyols, particularly for the production of rigid polyurethane foams**

(30) Priority: 10.05.1995 IT TO950368
(71) Applicant: C.O.I.M. S.p.A., I-20019 Settimo Milanese, Milano (IT)
(72) Inventor: Frigo, Roberto, c/o C.O.I.M. S.p.A., 20019 Settimo Milanese (Milano) (IT); Viola, Innocente, c/o C.O.I.M. S.p.A., 20019 Settimo Milanese (Milano) (IT)
(74) Representative: Rambelli, Paolo

(57) **Abstract**

The polyester polyols described, which are useful particularly for the production of polyurethane foams, are produced by the reaction of a carboxylic acid, its ester or anhydride with a mixture based on polyalcohols comprising the organic byproduct of pentaerythritol production.

## Description

The present invention relates to a method of producing polyurethanes, particularly rigid polyurethane foams, and to polyester polyols useful for the production of polyurethanes.

The use of polyester polyols obtained by reacting polycarboxylic acids, their anhydrides or esters, by a transesterification or polycondensation process, with polyhydric alcohols with or without a catalyst generally selected from metallic or metallic-organic compounds such as sodium hydroxide, titanates, and tin compounds, is well known for the production of polyurethanes. In general, these reactions are carried out at temperatures of between about 130°C and 240°C for reaction periods of the order of from 12 to 16 hours. Amongst the polycarboxylic acids used in the industry for this process may be mentioned, by way of example, succinic, glutaric, adipic, suberic, azelaic, maleic, fumaric, isophthalic and terephthalic acids. Amongst the polyhydric alcohols, either aliphatic or aromatic alcohols are used, amongst which, by way of example, ethylene glycol, diethylene and triethylene glycol, propylene glycols, butylene glycols, glycerol, neopentyl glycol, triethanolamine and pentaerythritol are used in particular.

Canadian patent CA-B-1 223 390 describes polyester polyols useful for the production of polyurethanes, produced by the polycondensation and transesterification of a mixture of adipic, glutaric and succinic acid (an AGS mixture), their anhydrides or lower alkyl esters, with dihydric, trihydric and tetrahydric alcohols. The polyols thus obtained are characterized by hydroxyl values of less than 600, acid values of less than 3 and hydroxylic functionalities equal to or greater than 2.

In order to reduce production costs, polyester polyols which are cheap since they are obtained from residues of the production of dimethylterephthalate (DMT) and recovered PET materials have recently been used; these polyesters have been used for the formulation of rigid polyurethane foams (PUR) and polyisocyanurates (PIR). Although the use of these polyester polyols, which are characterized by low functionality and hydroxyl values within the range from 330 to 400 mg KOH/g, involves an improvement in the fire resistance of the foams thus produced, it also has an adverse effect on the dimensional stability of these foams. For this reason, in PUR technology, these polyester polyols are used only in mixtures with polyethers, in proportions of from 30 to 35% by weight.

European patent EP-B-0 192 325 describes polyester polyols used for the production of rigid polyurethane foams produced by the reaction of a polycarboxylic acid with an alkoxylated polyhydric derivative which in turn is the product of the reaction of a polyhydric alcohol having the structure of a cyclic pentaerythritol formal with alkylene oxides.

The object of the present invention is to provide a particularly cheap method of producing polyurethanes with the use of polyester polyols produced from cheap reagents; at the same time, the invention proposes the provision of cheap polyester polyols suitable for the production of polyurethanes, particularly rigid polyurethane foams having good fire resistance even in the absence of chloro-fluorocarbons as expanders, low friability and good dimensional stability, by both PUR and PIR technology.

For these purposes, a subject of the invention is a method of producing polyurethane foams by the reaction of an isocyanate with a reactive mixture of a polyester polyol in the presence of an expanding agent, characterized in that the reactive mixture is the product of the reaction of a carboxylic acid, its ester or anhydride, with a mixture based on polyalcohols comprising the organic byproduct of pentaerythritol production.

The organic byproducts of pentaerythritol (O.B.P.s) are defined chemically as a complex combination of compounds produced by the reaction of acetaldehyde with formaldehyde (the product defined by CAS No. 68442-60-4); typically, they contain pentaerythritol, its oligomers and their acetals, formals, hemiacetals and hemiformals in aqueous solution.

Typically, the product available commercially is in the form of an aqueous solution comprising about 70-85% of an organic fraction having an average molecular weight in the range from 180 to 200. The organic portion typically comprises: up to about 60% by weight of cyclic pentaerythritol monoformal (5-(5-hydroxymethyl-1-3-dioxane)-methanol) or its derivatives of the general formula: 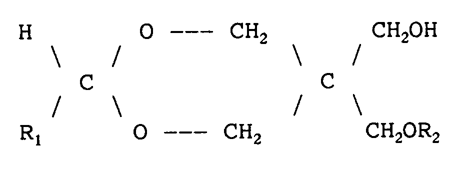 in which R₁ is hydrogen, or a methyl or methoxy group and R₂ is hydrogen, CH₂OH or CH₂-C(CH₂OH)₃ or mixtures thereof,
up to 10% by weight of pentaerythritol,
up to 10% by weight of the pentaerythritol monoformal (C₁₁H₂₄O₈),
up to 5% by weight of dipentaerythritol,
up to 6% by weight of sodium formate,
the remainder up to 100% being constituted by various formals and polyoses.

The organic byproduct of pentaerythritol used within the scope of the invention may be supplemented with other reactive compounds, particularly polyether or polyester polyols and/or glycols, such as ethylene glycol, diethylene glycol, propylene glycol and dipropylene glycol and polyalcohols such as glycerol, trimethylol propane, sorbitol, mannitol and alkanolamine. The production of polyesters based on the organic pentaerythritol byproduct may provide for the addition of cheap recycled products such as polyethyleneterephthalate (PET) or dimethylterephthalate (DMT) by means of an alcoholysis or transesterification process with polyalcohols such as diethylene glycol, glycerol and the like.

The acids used within the scope of the invention for the esterification reaction comprise adipic, glutaric and succinic acids (particularly AGS mixtures), phthalic anhydride, isophthalic acid, terephthalic acid, their lower alkyl (C₁-C₃) esters, trimellitic anhydride, and monocarboxylic acids; it is intended that mixtures of the aforementioned acids, esters and anhydrides may be used.

During the production of polyurethanes, particularly rigid polyurethane foams, the isocyanates used are conventional isocyanates such as, for example, toluene di-isocyanate (TDI), 4,4'-methylene-bis(phenylisocyanate) (MDI), polymeric phenyl methane isocyanate (PMDI) and others normally available as commodities. The reaction to form foam is carried out in the presence of conventional catalysts; catalysis which uses "blowing" catalysts (for example Air Products' DABCI-A₁) with synergy is preferred since the polyols used according to the invention generally have a higher reactivity than polyethers.

The expanding agents for the formation of foams comprise n-pentane, cyclopentane, isopentane, CO₂, HCFCs and HFCs such as HCFC 14lb and HFC 143A.

### Example 1

### Step 1:

| | |
|---|---|
| Diethylene glycol | 40.9835 parts by weight |
| PET | 24.0151 parts by weight |

were loaded in sequence into a reactor with a stirrer, with stirring.

The mixture was heated to 235°C with stirring and the temperature was kept constant for 4 hours. Upon completion of the glycolysis, a cloudy product having a Brinnel viscosity of about 300 mPas at 25°C was obtained.

### Step 2:

The mixture was cooled to 150°C and

| | |
|---|---|
| AGS (a mixture of adipic, glutaric and succinic acids with an A:G:S ratio of 20:60:20) | 29.6693 parts by weight |
| Pentaerythritol-production products | 13.3325 parts by weight (100% organic residue) |

were added in sequence to the same reactor.

The organic pentaerythritol byproduct had the following composition:

| | |
|---|---|
| organic fraction | about 80% by weight |
| water | about 20% by weight |

composition of the organic portion (anhydrous):

| | |
|---|---|
| cyclic pentaerythritol monoformal | 30-35% by weight |
| pentaerythritol | 7-8% by weight |
| pentaerythritol monoformal | 4-5% by weight |
| dipentaerythritol | 1-2% by weight |
| sodium formate | 3-4% by weight |

the remainder up to 100% being constituted by various formals or polyoses.

The esterification reaction was carried out at a temperature of 220-225°C with stirring, the esterification water being distilled and the temperature at the head of the distillation column associated with the reactor being monitored so as not to exceed 100°C, to prevent loss of glycols. The reaction continued under these conditions at the temperature given above until the desired acidity value was reached; a vacuum was applied, the temperature was maintained until a desired residual moisture content was reached and the product obtained was cooled, discharged and subjected to filtration.

Characteristics of the product:

| | |
|---|---|
| Appearance: | cloudy |
| Gardner colour: | 16 |
| Hydroxyl value: | 300 mg KOH/g |
| Acidity value: | 4 mg KOH/g |
| Br. Viscosity at 25°C (cPs): | 4500 |
| % of H₂O: | 0.1 |

### Example 2

| | |
|---|---|
| Diethylene glycol | 39.5870 parts by weight |
| AGS (having the composition defined in Example 1) | 40.8416 parts by weight |
| Pentaerythritol-production byproduct (with the composition defined in Example 1) | 30.6262 parts by weight (100% organic residue) |

were loaded into an esterification reactor in sequence.

Esterification was carried out, the temperature being brought gradually to 200-215°C and maintained until the values specified were achieved. The mixture was cooled and discharged by filtration.

Characteristics of the product:

| | |
|---|---|
| Appearance: | cloudy |
| Gardner colour: | 14 |
| Hydroxyl value: | 350 mg KOH/g |
| Acidity value: | 7 mg KOH/g |
| Br. Viscosity at 25°C (cPs): | 6000 |
| % of H₂O: | 0.1 |

The polyester polyols obtained by the reaction of the organic pentaerythritol byproduct with the acids, esters and anhydrides mentioned above constitute a further subject of the invention; these polyester polyols have hydroxyl values in the range from 250 to 650 mg KOH/g, functionalities between 2.5 and 4, and acidity values preferably between 1 and 20 mg KOH/g, preferably between 6 and 15 mg KOH/g.

The reactivity of the polyester polyols towards isocyanate in the polyurethane-foam production process is controlled and regulated by means of the final acidity of the polyester which can be varied within the range mentioned above by altering the parameters of the method: the reaction time, temperature, and vacuum level.

For this purpose, polyesters having acidity numbers of 2, 6.5 and 12 mg KOH/g were produced with the use of the formulation described in example 2.

### Example 3

| | |
|---|---|
| Diethylene glycol | 30.4500 parts by weight |
| Glycerol | 13.2000 parts by weight |
| Pentaerythritol-production byproduct (with the composition defined in Example 1) | 28.4500 parts by weight (100% organic residue) |
| AGS (composition as defined in Example 1) | 38.2000 parts by weight |

were loaded into an esterification reactor in sequence and with stirring.

The mixture was heated to 215-220°C and esterification was carried out up to an acidity value of 7-5.

The mixture was cooled and discharged by filtration.

Final characteristics of the product:

| | |
|---|---|
| Appearance: | clear |
| G colour: | 18 |
| Acidity value: | 5 mg KOH/g |
| Hydroxyl value: | 490 mg KOH/g |
| Br. viscosity at 25°C (cPs): | 7500 |
| % H₂O: | 0.1. |

### Example 4

| | |
|---|---|
| Diethylene glycol | 15.5500 parts by weight |
| Glycerol | 26.9500 parts by weight |
| Pentaerythritol-production byproduct (with the composition of Example 1) | 29.0500 parts by weight (100% organic residue) |
| AGS (as in Example 1) | 39.000 parts by weight |

were loaded into the reactor in sequence and with stirring according to the method of Example 4.

The mixture was heated to 215-220°C and esterification was carried out to an acid value of 7-5. The mixture was cooled and discharged by filtration.

Final characteristics of the product:

| | |
|---|---|
| Appearance: | clear |
| G colour: | 18 |
| Acidity value: | 6.5 mg KOH/g |
| Hydroxyl value: | 570 mg KOH/g |
| Br. viscosity at 25° (cPs): | 20000 |
| % H₂O: | 0.1. |

### Examples 5-7

The polyesters produced according to Example 2, having acid values of 2, 6.5 and 12 mg KOH/g, respectively, were used to produce rigid polyurethane foams in laboratory tests with the use of the following formulations:

| **POLYESTER ACID VALUE mg KOH/g** | **2** | **6.5** | **12** |
|---|---|---|---|
| | | | |

| **POLYOL MIX FORM**. | | | |
|---|---|---|---|
| POLYESTER | 100 | 100 | 100 |
| SILICONE | 2 | 2 | 2 |
| DMCA CATALYST | 1.8 | 1.8 | 1.8 |
| DMMP | 10 | 10 | 10 |
| PENTANE | 5 | 5 | 5 |
| WATER | 3 | 3 | 3 |
| ISOCYANATE | 187 | 187 | 187 |

in which the quantities of the components are expressed as parts by weight.

The polyesters of the invention used in the method of preparing rigid polyurethane foams have high reactivity towards isocyanate owing to the presence of sodium formate, to the high percentage of primary hydroxyl groups (100% in some cases), and to the equivalent weights which tend to be low; the combination of these factors favours the achievement of shorter curing times for the foam.

The reactivity values obtained are given in the following table.

| **POLYESTER ACID VALUE mg KOH/g** | **2** | **6.5** | **12** |
|---|---|---|---|
| | | | |

| **REACTIVITY** | | | |
|---|---|---|---|
| CREAM TIME | 12˝ | 12˝ | 12˝ |
| GEL TIME | 30˝ | 40˝ | 50˝ |
| T.F.T. | 40˝ | 52˝ | 67˝ |
| D.L. | 28.1 | 28.4 | 28.6 |

The fire resistance of the resulting foams was wholly satisfactory both owing to the presence of few ether groups (which, as is well known, are less resistant) and owing to the high fraction of isocyanate in the final polymer if the polyester used is characterized by a high hydroxyl value.

The polyester polyols of the present invention enable systems with medium-high isocyanate indices to be formulated without requiring trimerization catalysts; the catalysis can be based on common amino-catalysts used in PUR systems.

The improved fire resistance enables systems for PU foams to be formulated with lower quantities of flame-proofing additives (halogenates and/or phosphonates) with a positive impact on the environment and on costs, and also permits operation with low isocyanate indices, favouring the ability of the systems to be processed and improved mechanical characteristics of the foam.

In the method of the invention, the pentaerythritol-production byproduct can be used as it is available on the market, or in a decationized form produced by subjecting the product to an ion-exchange treatment in order substantially to eliminate the sodium. The polyesters obtained with the use of the pentaerythritol byproduct free or substantially free of sodium formate have lesser activity and lesser hardening of the resulting polyurethane foam.

Within the scope of the invention, it has been found that sodium formate has a significant catalytic effect in the reaction for the formation of polyurethanes and is therefore useful as a catalyst of polyurethane systems. This catalytic effect is not limited to polyurethane systems which use the polyester polyol produced with the use of the organic pentaerythritol-production byproduct but also extends to polyester and polyether polyols used conventionally in the reaction with isocyanates, of the type mentioned above, for the production of polyurethane foams.

## Claims

1. A method of producing polyurethane foams by the reaction of an isocyanate with a reactive mixture of a polyester polyol in the presence of an expanding agent, characterized in that the polyester polyol is the product of the reaction of a carboxylic acid, its ester or anhydride with a mixture including polyols comprising the organic byproduct of pentaerythritol production.

2. A method according to Claim 1, characterized in that the organic pentaerythritol byproduct used comprises, with reference to the weight of its organic fraction:
- up to 60% by weight of cyclic pentaerythritol monoformal or its derivatives of the general formula: 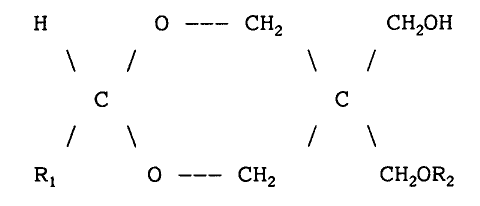 in which R₁ is hydrogen, or a methyl or methoxy group and R₂ is hydrogen, CH₂OH or CH₂-C(CH₂OH)₃,
up to 10% by weight of pentaerythritol,
up to 10% by weight of the pentaerythritol monoformal,
up to 5% by weight of dipentaerythritol,
up to 6% by weight of sodium formate.

3. A method according to Claim 1 or Claim 2, in which the organic byproduct of pentaerythritol comprises:
- from 30 to 35% by weight of cyclic pentaerythritol monoformal,
- from 7 to 8% of pentaerythritol,
- from 4 to 5% of pentaerythritol monoformal,
- from 1 to 2% by weight of dipentaerythritol and
- from 3 to 4% by weight of sodium formate, with reference to the organic fraction of the byproduct.

4. A method according to any one of Claims 1 to 3, in which the polyester polyol used is the product of the reaction of a dicarboxylic acid, its ester or anhydride with organic pentaerythritol-production byproducts in combination with the glycolysis product of PET or DMT.

5. A method according to any one of Claims 1 to 3 wherein said polyester polyol is the product of the reaction of a dicarboxylic acid or mixture of dicarboxylic acids with the pentaerythritol-production byproduct in combination with diethylene glycol and/or glycerol.

6. A method according to any one of Claims 1 to 5, in which the dicarboxylic acid is selected from adipic, glutaric, succinic, isophthalic and terephthalic acids, their lower alkyl (C₁-C₃) esters, phthalic anhydride and trimellitic anhydride, and mixtures thereof.

7. A method according to any one of Claims 1 to 6, in which the polyester polyol has a hydroxyl value of from 250 to 650 mg KOH/g and an acidity value of from 1 to 20 mg KOH/g, preferably from 6 to 15 mg KOH/g.

8. A polyester polyol having a hydroxyl value of from 250 to 650 mg KOH/g, produced by the reaction of a dicarboxylic acid with a reactive mixture based on polyalcohols comprising the organic pentaerythritol-production byproduct, as defined in any one of the preceding claims.

9. The use of sodium formate as a catalyst in the method of producing polyurethane foams by the reaction of an isocyanate with a reactive mixture comprising a polyester polyol or a polyether polyol.
